# EUROPÄISCHE PATENTSCHRIFT

(11) **EP 1 368 738 B1**
(45) Veröffentlichungstag und Bekanntmachung des Hinweises auf die Patenterteilung: **08.06.2005**
(21) Anmeldenummer: 02714018.5
(22) Anmeldetag: 15.02.2002
(51) Int. Cl.: G06F 13/42

(54) **BUSSYSTEM MIT IM MULTIPLEXBETRIEB BETREIBBAREN ADRESS/DATENBUS UND STEUERBUS ZUM ANSPRECHEN EINER STATION DURCH ZUWEISUNG EINES LOGISCHEN KANALS**
BUS SYSTEM COMPRISING AN ADDRESS/DATA BUS WHICH CAN BE OPERATED IN A MULTIPLEX MODE AND CONTROL BUS RESPONDING TO A STATION BY ALLOCATING A LOGICAL CHANNEL
SYSTEME DE BUS DE DONNEES COMPRENANT UN BUS DE DONNEES POUVANT FONCTIONNER EN MODE MULTIPLEX ET PROCEDE POUR FAIRE FONCTIONNER CE SYSTEME

(30) Priorität: 15.03.2001 DE 10112541
(43) Veröffentlichungstag der Anmeldung: 10.12.2003
(73) Patentinhaber: Infineon Technologies AG, 81669 München (DE)
(72) Erfinder: KNIFFLER, Oliver, 81739 München (DE); SEDLAK, Holger, 82054 Sauerlach (DE)
(74) Vertreter: Epping Hermann & Fischer
(86) Internationale Anmeldenummer: PCT/DE2002/000549
(87) Internationale Veröffentlichungsnummer: WO 2002/075551

(56) Entgegenhaltungen:
- US-A- 4 713 805
- US-A- 4 827 471

## Beschreibung

Die Erfindung betrifft eine Datenbusanordnung mit einem im Multiplexbetrieb betreibbaren Datenbus und ein Verfahren zum Betreiben dieser Anordnung gemäß den Patentansprüchen 1 und 2. Allgemein üblich sind zwei Datenbusanordnungen. Die eine ist aus einem Datenbus und einem Adreßbus zusammengesetzt. Über dem Adreßbus wird von der Steuerstation, die im weiteren "Master" genannt wird, eine Empfangsstation, die im weiteren "Slave" genannt wird, aufgerufen und sodann wird zwischen denen über den Datenbus ein Datum oder mehrere Daten ausgetauscht. Eine derartige Anordnung weist den Nachteil auf, daß sowohl ein Datenbus als auch ein Adreßbus vorzusehen ist, die entsprechend der Bit-Breite viele Leitungen aufweisen müssen.

Weiterhin sind Datenbusanordnungen bekannt, die im Multiplexbetrieb betrieben werden. Dabei wird über den Datenbus vom "Master" zunächst die Adresse des "Slave" übertragen, der angesprochen werden soll. Anschließend werden dann die Daten ausgetauscht. Dies erfordert einen ziemlichen Aufwand, insbesondere wenn "Master" und "Slave" auf einem einzigen Chip liegend über den Bus miteinander verbunden sind.

Das Dokument US4713805 zeigt ein Verfahren zur Auswahl einer Station aus einer Anzahl von Stationen. Eine Masterstation sendet eine Anfrage an eine Gruppe von Stationen. Eine Station mit Übertragungsbedarf überträgt daraufhin Daten auf einer Multiplexverbindung in einem Zeitschlitz, dessen Verzögerung von der Adresse der Station abhängt.

Der Erfindung liegt somit die Aufgabe zugrunde, eine Datenbusanordnung mit einem im Multiplex betreibbaren Datenbus vorzusehen, bei dem der Multiplexbetrieb vereinfacht ist. Diese Aufgabe wird erfindungsgemäß mit den im Patentanspruch 1 bzw. 2 angegebenen Mitteln und Maßnahmen gelöst.

Durch das Vorsehen eines Steuerbusses ist es möglich, nach der Übertragung oder zusammen mit der Übertragung einer Adresse im Multiplexbetrieb über den Steuerbus dem angesprochenen "Slave" einen logischen Kanal zuzuweisen. Dieser logische Kanal bleibt sodann so lange zugewiesen, bis vom "Ma-ster" einem anderen "Slave" dieser logische Kanal zugewiesen wird. Solange der logische Kanal zugewiesen ist, muß vor dem Datenaustausch nicht erst die Adresse des anzusprechenden "Slave" aufgerufen werden, sondern es muß nur der logische Kanal geöffnet sein. Auf diese Weise wird mit geringem Aufwand der Multiplexbetrieb eingeschränkt. Diese Maßnahme lohnt sich natürlich nur so lange, wie der Steuerbus zum Ansprechen des logischen Kanals eine eingeschränkte Breite aufweist, da sonst auf den Multiplexbetrieb vollständig verzichtet werden könnte und mit Adreß- und Datenbus gearbeitet werden kann. Insgesamt bietet diese Anordnung jedoch den Vorteil, daß durch das grundsätzliche Vorsehen des Multiplexbetriebs von Adreß- und Datenübertragung ein sehr umfangreicher Adreßraum ansprechbar ist, und durch das zusätzliche Vorsehen des Steuerbusses mit eingeschränkter Bit-Breite zwischen ausgesuchten "Slaves" schnell umgeschaltet werden kann, wobei nicht von vornherein festgelegt ist, welche diese ausgesuchten "Slaves" sind. Weitere vorteilhafte Ausgestaltungen der Erfindung sind in den Unteransprüchen angegeben.

### Es zeigen:

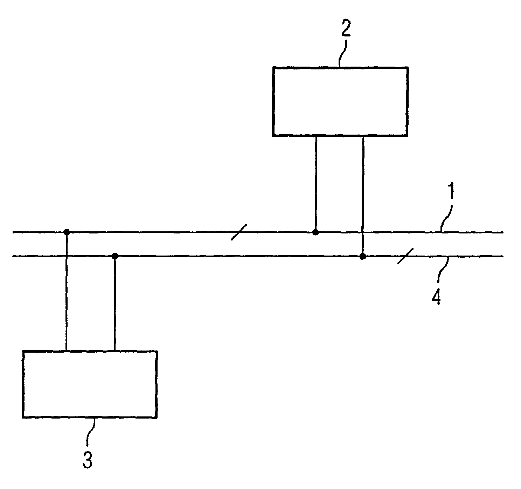

Die Figur ein erfindungsgemäßes Ausführungsbeispiel der Datenbusanordnung.

In der Figur ist ein Datenbus 1 dargestellt, der eine nicht näher bezeichnete Bit-Breite aufweist. An diesem Datenbus 1 ist eine auch "Master" genannte Steuerstation 2 angeschlossen. Ebenfalls ist an dem Datenbus 1 eine auch "Slave" genannte Empfangsstation 3 angeschlossen. Entsprechend der Bit-Breite des Datenbusses 1 und dem damit ansprechbaren Adreßraum, können mehrere hier nicht weitere dargestellte "Slaves" an den Datenbus 1 angeschlossen werden. Vor dem Versenden bzw. Abrufen von Daten über den Datenbus 1 durch den "Master" 2, schickt der "Master" 2 eine Adresse über den Datenbus 1. Der Datenbus 1 wird von den angeschlossenen "Slaves" 3 ständig überprüft und sobald die eigene Adresse auf dem Datenbus 1 erscheint, fühlt sich der jeweilige "Slave" 3 angesprochen.

Sodann wird über den Datenbus nach vorgegebener üblicher Konvention Befehle und/oder Daten ausgetauscht. Es kann sich hierbei beispielsweise um einen Schreibbefehl und zu schreibende Daten von "Master" 2 an den "Slave" 3 handeln. Genauso gut kann es sich um einen Lesebefehl des "Masters" 2 an den "Slave" 3 handeln. Da die "Slaves" 3 den Datenbus ständig überwachen, muß normalerweise vor jedem Datenaustausch, d. h. Befehl und Datum, die Adresse des angesprochenen "Slaves" 3 vom "Master" 2 abgegeben werden, damit der anzusprechende "Slave" identifizierbar ist.

Nunmehr ist erfindungsgemäß zusätzlich ein Steuerbus'4 vorgesehen, an dem sowohl der "Master" 2 als auch der "Slave" 3 angeschlossen sind. Für den Betrieb bedeutet dies, daß der "Master" 2 zunächst über den Datenbus 1 die Adresse überträgt, so daß der "Slave" 3 angesprochen ist. Danach erfolgt ein Zuweisungsbefehl, mit dem dem zuvor angesprochenen "Slave" 3 ein bestimmter logischer Kanal zugewiesen wird. Ist diese Zuweisung einmal getroffen, muß vor dem nächsten Ansprechen des ausgesuchten "Slaves" 3 durch den "Master" 2 nicht erst die Adresse über den Datenbus 1 übertragen werden, sondern es reicht, den logischen Kanal über den Datenbus 4 zu übermitteln. Der "Slave" 3 überwacht den Steuerbus 4 und ist angesprochen, sobald mit diesem der ihm logisch zugewiesene Kanal geöffnet ist.

Besteht der Steuerbus 4 aus einer Leitung, so können zwei logische Kanäle zugewiesen werden.

Besteht der Steuerbus aus zwei Leitungen, d. h. zwei Bit-Breite, so können vier logische Kanäle usw. aufgebaut werden. Dies bedeutet allerdings nicht, daß nur so viele "Slaves" 3 an der Datenbusanordnung anschließbar sind, wie logische Kanäle vorgesehen sind. Darüber hinausgehende "Slaves" 3 sind nur über die Adresse ansprechbar.

Sollen alles "Slaves" 3 stets über den Steuerbus ansprechbar sein, so muß die Bit-Breite des Steurbusses so gewählt sein, daß ausreichend viele logische Kanäle adressierbar sind. Jeder "Slave" bekommt beim Adressieren einen logischen Kanal zugewiesen, der so lange gültig ist, bis diesem Kanal eine andere Adresse und damit ein anderer "Slave" zugewiesen wird.

Im Betrieb bedeutet das, um logische Kanäle wechseln zu können, muß mit einer vorgegebenen Anzahl von Taktperioden Adressen über den Datenbus 1 übertragen werden. Das bedeutet, sind beispielsweise drei "Slaves" 3 an der Datenbusanordnung angeschlossen und es stehen nur zwei logische Kanäle zur Verfügung, so kann nach einer fest vorgegebenen Konvention nach einer bestimmten Anzahl von Taktperioden durch Aufruf der entsprechenden Adresse dem "Slave" 3, dem bisher ein bestimmter logischer Kanal zugewiesen ist, dieser entzogen werden und einem anderen "Slave" 3 zugewiesen werden.

Dies erhöht die Flexibilität mit geringerem Aufwand und ermöglicht es, daß bei stark eingeschränktem Multiplexbetrieb ein zügiger Datenaustausch zwischen "Master" 2 und "Slave" 3 durchführbar ist.

### Bezugszeichenliste

- 1: Datenbus
- 2: Steuerstation
- 3: Empfangsstation
- 4: Steuerbus

## Patentansprüche

1. Datenbusanordnung mit einem im Multiplexbetrieb betreibbaren Datenbus (1), an dem zumindest eine Steuerstation (2) und eine Empfangsstation (3) angeschlossen ist,
**gekennzeichnet durch**
einen zusätzlichen Steuerbus (4), über den von der Steuerstation (2) der Empfangsstation (3) ein logischer Kanal zuweisbar ist und zwischen Steuerstation (2) und Empfangsstation (3) Daten so lange austauschbar sind, wie der logische Kanal der Empfangsstation zugewiesen bleibt und aufgerufen ist.

2. Verfahren zum Betreiben einer Anordnung gemäß Patentanspruch 1, bei der von der Steuerstation (2) eine Empfangsstation (3) durch Übertragen einer Adresse auf den Datenbus (1) angesprochen wird,
- der Empfangsstation (3) über den Steuerbus (4) ein logischer Kanal zugewiesen wird und
- zwischen Steuerstation und Empfangsstation (3) Daten so lange austauschbar sind, wie der logische Kanal der Empfangsstation zugewiesen bleibt und aufgerufen ist.

3. Verfahren nach Anspruch 2,
**dadurch gekennzeichnet, daß**
vor oder zeitgleich mit der Übertragung von Daten die Empfangsstation (3) über den Steuerbus (4) durch Aufruf des logischen Kanals angesprochen wird.

## Claims

1. Data bus arrangement having a data bus (1) which can be operated in multiplex mode and to which at least one control station (2) and a reception station (3) are connected,
**characterized by**
an additional control bus (4) via which the control station (2) can allocate a logical channel to the reception station (3) and data can be interchanged between control station (2) and reception station (3) for as long as the logical channel remains allocated to the reception station and is called.

2. Method for operating an arrangement according to Patent Claim 1, in which the control station (2) solicits a reception station (3) by transferring an address onto the data bus (1),
- a logical channel is allocated to the reception station (3) via the control bus (4), and
- data can be interchanged between control station and reception station (3) for as long as the logical channel remains allocated to the reception station and is called.

3. Method according to Claim 2,
**characterized in that**,
before or at the same time as the transfer of data, the reception station (3) is solicited via the control bus (4) by calling the logical channel.

## Revendications

1. Système de bus de données comportant un bus de données (1) susceptible de fonctionner en mode multiplex, auquel sont raccordés au moins un poste de commande (2) et un poste de réception (3),
**caractérisé par** un bus de commande (4) supplémentaire grâce auquel le poste de commande (3) peut attribuer un canal logique au poste de réception (3) et
des données peuvent être échangées entre le poste de commande (2) et le poste de réception (3) aussi longtemps que le canal logique reste attribué au poste de réception et qu'il est interrogé.

2. Procédé pour faire fonctionner un système selon la revendication 1, d'après lequel
le poste de commande (2) interroge un poste de réception (3) en transmettant une adresse sur le bus de données (1),
un canal logique est attribué au poste de réception (3) par l'intermédiaire du bus de commande (4) et
des données peuvent être échangées entre le poste de commande et le poste de réception (3) tant que le canal logique reste attribué au poste de réception et qu'il est interrogé.

3. Procédé selon la revendication 2, **caractérisé en ce que**, en même temps ou avant que les données sont transmises, le poste de réception (3) est interrogé par l'intermédiaire du bus de commande (4) en appelant le canal logique.
